(19) Europäisches Patentamt
European Patent Office
Office européen des brevets

(11) **EP 3 236 422 B1**

(12) **EUROPEAN PATENT SPECIFICATION**

(45) Date of publication and mention
of the grant of the patent:
**29.01.2020 Bulletin 2020/05**

(51) Int Cl.:
**G06T 15/04** (2011.01)   **G06T 17/00** (2006.01)

(21) Application number: **16305460.4**

(22) Date of filing: **21.04.2016**

(54) **METHOD AND DEVICE FOR DETERMINING A 3D MODEL**

VERFAHREN UND VORRICHTUNG ZUR BESTIMMUNG EINES 3D-MODELLS

PROCÉDÉ ET DISPOSITIF DE DÉTERMINATION D'UN MODÈLE 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.10.2017 Bulletin 2017/43**

(73) Proprietor: **Alcatel Lucent
91620 Nozay (FR)**

(72) Inventor: **TYTGAT, Donny
2018 Antwerp (BE)**

(74) Representative: **Nokia EPO representatives
Nokia Technologies Oy
Karakaari 7
02610 Espoo (FI)**

(56) References cited:
- **Stefan Hauswiesner: "Adapting Hair and Face Geometry of Virtual Avatars with the Kinect Sensor Hannes Plank Supervised by", , 2015, XP055310942, Retrieved from the Internet: URL:http://www.cescg.org/CESCG-2015/papers /Plank-Adapting_Hair_and_Face_Geometry_of_ Virtual_Avatars_with_the_Kinect_Sensor.pdf [retrieved on 2016-10-14]**
- **JOHNSON A E ET AL: "Registration and integration of textured 3-D data", 3-D DIGITAL IMAGING AND MODELING, 1997. PROCEEDINGS., INTERNATIONAL CO NFERENCE ON RECENT ADVANCES IN OTTAWA, ONT., CANADA 12-15 MAY 1, LOS ALAMITOS, CA, USA,IEEE COMPUT. SOC, US, 12 May 1997 (1997-05-12), pages 234-241, XP010234181, DOI: 10.1109/IM.1997.603871 ISBN: 978-0-8186-7943-8**
- **BRIAN CURLESS ET AL: "A volumetric method for building complex models from range images", COMPUTER GRAPHICS PROCEEDINGS. SIGGRAPH '96, ACM, NEW YORK, US, 1 August 1996 (1996-08-01), pages 303-312, XP058220108, DOI: 10.1145/237170.237269 ISBN: 978-0-89791-746-9**

**Description**

FIELD OF THE INVENTION

The present invention relates to the field of 3D graphics. In particular, the present invention relates to methods and devices for determining a 3D model.

BACKGROUND

Traditional texture mapping approaches require the meshed 3D model to be parameterized: each vertex on the model is associated with 2D coordinates on a texture map. One effectively "unwraps" the 3D model onto the 2D space.

When using implicit surface modeling however, one does not have an explicit representation of the surface. Parameterizing such an implicit model is thus not straightforward.

Not many automated solutions exist for implicit model texturing, and even fewer that can do so in real-time. One can first make the model explicit by meshing, however the resulting problem is still very big. Only when limiting the potential topology of the explicit model can one effectively construct a viable texture map in real-time.

An alternative to texture mapping is the use of projective texturing for generating an appearance when rendering the 3D model. For projective texture, one essentially projects the image back from the camera onto the geometry; effectively the inverse process as when a camera captures an image. While projective texturing is a good approach for modeling temporal variations, its use is less applicable for rendering based on noisy geometry estimates. The problem that then occurs is that the projected texture has an embedded assumption of the geometry while the geometry on which one projects this texture is only an estimate of this geometry. This can cause errors that can be difficult to detect and remedy.

No solutions are known that allow for the traditional texture mapping approach to be used in combination with an (unrestricted) implicit model.

The publication "A Volumetric Method for Building Complex Models from Range Images" by Brian Curless and Marc Levoy, Proceedings SIGGRAPH'96, discloses a technique for reconstructing surfaces by integrating groups of aligned range images, wherein the range images are converted, one at a time, to a distance function which is then combined with data already acquired.

Andrew E Johnson and Sing B Kang: "Registration and Integration of Textured 3D Data", Proceedings of 3-D Digital Imaging and Modelling, Ottawa, May 1997, discloses a method for merging multiple textured 3D data sets, each of which corresponds to a different view of a scene. The data sets are registered and integrated using a 3d occupancy grid which represents likelihood of spatial occupancy. In addition to occupancy information, surface normals are stored which are used to extract a surface from the occupancy grid. Textures from multiple views are blended on the surface.

SUMMARY

It is thus an object of embodiments of the present invention to propose a method and a device for determining a 3D model, which do not show the inherent shortcomings of the prior art.

Accordingly, embodiments relate to Method for determining a 3D model of a surface, executed by a 3D model determination device, comprising:

- obtaining a plurality of 2D+Z images of said surface from respective 2D+Z image sources,
- determining, in function of the 2D+Z images, implicit surface data modeling said surface, wherein the implicit surface data specify, for respective sample points of a 3D field, a distance between said sample point and said surface and a 2D+Z image source identifier associated with said sample point,
- determining a plurality of surface points in function of the implicit surface data,
- for at least one of said surface points, determining at least one 2D+Z image source associated with said vertex in function of the implicit surface data, and at least one texture identifier and 2D texture coordinates associated with said surface point in function of 2D+Z image source modeling data associated with the determined at least one 2D+Z image source.

Correlatively, embodiments relates to a 3D model determination device for determining a 3D model of a surface, comprising a processor and a memory configured for:

- obtaining a plurality of 2D+Z images of said surface from respective 2D+Z image sources,
- determining, in function of the 2D+Z images, implicit surface data modeling said surface, wherein the implicit surface data specify, for respective sample points of a 3D field, a distance between said sample point and said surface and a 2D+Z image source identifier associated with said sample point,
- determining a plurality of surface points in function of the implicit surface data,
- for at least one of said surface points, determining at least one 2D+Z image source associated with said surface point in function of the implicit surface data, and at least one texture identifier and 2D texture coordinates associated with said surface point in function of 2D+Z image source modeling data associated with the determined at least one 2D+Z image source.

Determining the implicit surface data may comprise selecting one of the 2D+Z image sources as the most reliable 2D+Z image source for a sample point, the distance between said sample point and the surface being determined in function of the 2D+Z image obtained from the selected 2D+Z image source, the 2D+Z image source identifier associated with said sample point corresponding to the selected 2D+Z image source.

Some embodiments comprise obtaining reliability information from said 2D+Z image sources, and determining said implicit surface data in function of said reliability information.

Determining at least one 2D+Z image source associated with a surface point may comprise selecting the 2D+Z image source identifier of a sample point which has the smallest absolute distance to the surface among a set of sample points in the neighborhood of the surface point.

Determining 2D texture coordinates associated with a surface point may comprise projecting said surface point to an image plane of the identified 2D+Z image source, in function of said 2D+Z image source modeling data which specify a modelview matrix and a projection matrix.

Some embodiments comprise determining a parameterized 3D model having a weighted multi-textures format in function of the determined surface points, texture identifiers and 2D texture coordinates.

Some embodiments comprise determining successive 3D models of said surface at a rate of at least 10 3D models per seconds.

Some embodiments comprise transmitting the determined 3D model to a rendering device.

Embodiments relates to a computer program comprising instructions for performing the method above when said instructions are executed by a computer.

Embodiments relates to a system comprising a 3D model determination device and a plurality of 2D+Z image sources.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a bloc diagram of a system for determining a 3D model of a surface,
Figure 2 is a flowchart of a method for determining a 3D model of a surface, executed by a 3D model determination device of the system of Figure 1,
Figure 3 is a diagram illustrating the determination of 3D implicit surface data,
Figure 4 is a diagram illustrating the determination of vertices, and
Figure 5 is a structural view of the 3D model determination device of the system of Figure 1.

DESCRIPTION OF EMBODIMENTS

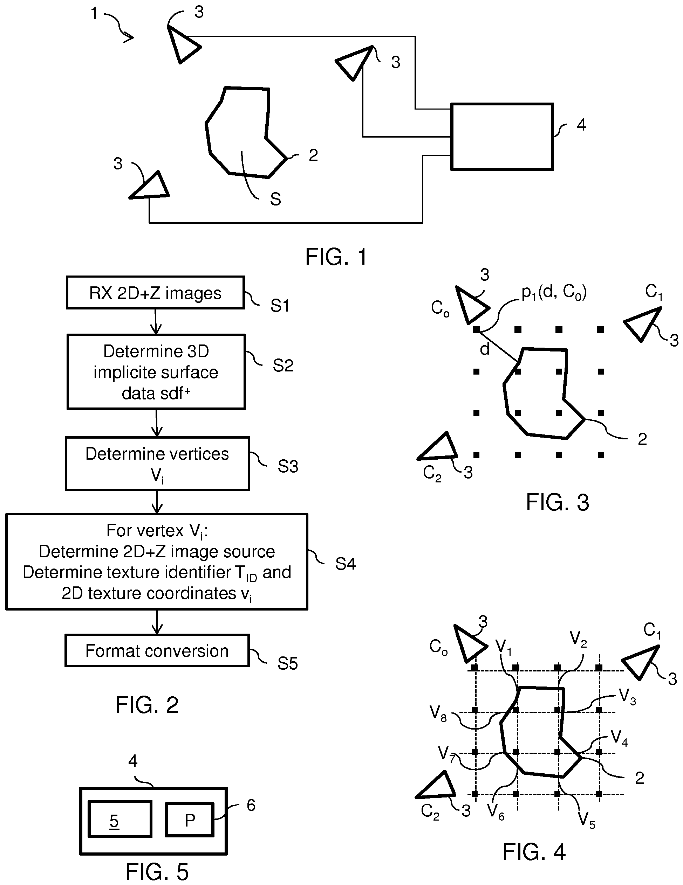

**Figure 1** is a bloc diagram of a system 1 for determining a 3D model of the surface S of an object 2. The system 1 comprises a plurality of 2D+Z image sources 3 and a 3D model determination device 4.

The object 2 may be for example (part of) a living being such a human face, a material object of fixed or variable shape...

A 2D+Z image source 3 is a capture device capable of providing a 2D+Z image of a part of the surface S, that is a 2D image wherein depth (Z) information is associated with respective pixels. A 2D+Z image source 3 is for example a stereoscopic camera wherein depth information may be determined in function of disparity, a time-of-flight camera...

The 3D model determination device 4 receives 2D+Z images of the surface S from the 2D+Z image sources 3 and determines a parameterized 3D model of the surface S, as described hereafter with reference to Figure 2. In some embodiments, the 3D model determination device 4 determines the parameterized 3D model of the surface S in real time. "Real time" means in this context that the 3D model determination device 4 is capable of determining successive parameterized 3D models of the surface S at a rate of at least 10 models per second, preferably at a rate comparable to a frame rate typically used in video such as 24, 30 or 60 models per second. This may be useful for example when the shape of the object 2 varies over time, for example in the case of a talking human face.

**Figure 2** is a flowchart of a method for determining a parameterized 3D model, executed by the 3D model determination device 4.

The 3D model determination device 4 receives a plurality of 2D+Z images of the surface S from the 2D+Z image sources 3 (Step S1). In some embodiments, the data received from a 2D+Z image sources 3 may require some pre-processing, such as format conversion, by the 3D model determination device 4. For example, if a stereoscopic camera determines depth in function of disparity itself, no preprocessing needs to be performed by the 3D model determination device 4, but if the stereoscopic camera provides a pair of stereoscopic images as representation of a 2D+Z image, the 3D model determination device 4 may need to determine depth in function of disparity.

Then, the 3D model determination device 4 determines implicit surface data $sdf^+$ in function of the received 2D+Z images (Step S2). The implicit surface data $sdf^+$ specify, for respective sample points of a 3D field, a signed distance between said sample point and the surface S and a 2D+Z image source identifier associated with said sample point. The signed distance is positive for sample points outside the object 2 and negative for sample points inside the object 2. This is illustrated on **Figure 3**, which is a 2D view of the 3D field, wherein a sample point p1 has a distance d from the surface S and is associated with 2D+Z image source identifier $C_0$. Various techniques may be used for determining the implicit surface data $sdf^+$ in function of the received 2D+Z images. For example, European patent application EP2660781A1 describes a technique based on octree decomposition for determining the signed distances d between sample points p and the surface S. This comprises determining one of the 2D+Z image sources as the most reliable source for a specific sample point, and it is the identifier of this 2D+Z image source that is associated with the sample point in the implicit surface data $sdf^+$. In some embodiment, the 2D+Z image sources 3 provide reliability information and this is used for determining the implicit surface data $sdf^+$.

The result of this process is an implicit representation that has the nearest distance along with the identification source of this nearest distance. We denote this function as $sdf^+$ with $sdf^+[0]$ defined to be the signed nearest distances and $sdf^+[1]$ the 2D+Z image source identifiers. For illustrative purposes, the following table shows a 2D representation of $sdf^+$ determined in function of three 2D+Z image sources 3 with respective identifiers $C_0$, $C_1$ and $C_2$:

| | | | |
|---|---|---|---|
| $+d_{00}, C_0$ | $+d_{01}, C_0$ | $+d_{02}, C_1$ | $+d_{03}, C_1$ |
| $+d_{10}, C_0$ | $-d_{11}, C_0$ | $-d_{12}, C_1$ | $+d_{13}, C_1$ |
| $+d_{20}, C_0$ | $-d_{21}, C_0$ | $-d_{22}, C_1$ | $+d_{23}, C_1$ |
| $+d_{30}, C_2$ | $+d_{31}, C_2$ | $+d_{32}, C_2$ | $+d_{33}, C_1$ |

Then, the 3D model determination device 4 determines surface points in function of the implicit surface data $sdf^+$ (Step S3). Known techniques have been proposed for converting an implicit surface to an explicit surface, thereby determining the surface points. Hereafter, the surface points are call vertices $V_i$. The terms vertices and vertex are usually link to triangle meshes, which may be used for rendering the 3D model. However, some embodiments do not rely on meshes, hence the use of the more generic terms "surface points".

**Figure 4** is a 2D view showing how the surface S could be reconstructed via a linear estimator from the implicit surface data sdf+. The sampling rate in this example is too low for an accurate reconstruction, however this is only for illustrative purposes. In reality one would sample at much higher rates. In order to do this reconstruction, one basically searches for edges that have conflicting signs in the sdf+[0]. This means that the relevant edge is intersected by the surface S, and thus a node will be added reflecting this intersection between the edge and the surface. The distances are used to interpolate to the correct location on the edge. The determined vertices $V_i$ are numbered $V_1$ to $V_8$ on Figure 4.

Then, for the respective vertices $V_i$, the 3D model determination device 4 determines at least one 2D+Z image source 3 associated with said vertex $V_i$ in function of the implicit surface data sdf+, and determines a texture identifier $T_{ID}$ and 2D texture coordinates $v_i$ associated with said vertex $V_i$ in function of 2D+Z image source modeling data associated with the determined at least one 2D+Z image source identifier (Step S4).

More specifically, in an embodiment, the 3D model determination device 4 determines an identifier of the 2D+Z image source 3 associated with vertex $V_i$, which is regarded as the main contributor for the vertex $V_i$. This may be determined for example as:

$$ID := id(argmin_x(abs(d(x))))$$

with x the neighboring implicit surface sample points for vertex $V_i$, $id(x) := sdf^+(x)[1]$ and $d(x) := sdf^+(x)[0]$

The images provided by the 2D+Z image sources 3 may be used as texture for the 3D model, and in that case the texture identifier $T_{ID}$ associated to vertex $V_i$ correspond to the identifier of the determined the 2D+Z image source 3. For example, $T_{ID}$ = ID.

The texture coordinates $v_i$ may be determined by projecting vertex $V_i$ to the identified 2D+Z image source 3:

$$v_i = P * M * V_i$$

with $v_i$ the 2D projection of the 3D point $V_i$, M the modelview matrix defining the rotation and translation of the 2D+Z image source and P the projection matrix defining the intrinsics of the 2D+Z image source (focal length, aspect ratio, etc. of the camera).

The following table shows the data specified by the parameterized 3D model of the surface S after step S4 (in an illustrative simplified example with only 8 vertices $V_i$):

| Vertex ID | $V_1$ | $V_2$ | $V_3$ | $V_4$ | $V_5$ | $V_6$ | $V_7$ | $V_8$ |
|---|---|---|---|---|---|---|---|---|
| Source ID (or Texture identifier $T_{ID}$) | $C_0$ | $C_1$ | $C_1$ | $C_1$ | $C_2$ | $C_2$ | $C_2$ | $C_0$ |
| Tex Coords | $v_1$ | $v_2$ | $v_3$ | $v_4$ | $v_5$ | $v_6$ | $v_7$ | $v_8$ |

In this table, each vertex $V_i$ of the 3D model is associated with a texture identifier $T_{ID}$ and 2D texture coordinates $v_i$. One may design a 3D graphic rendering device capable of generating a view of the 3D model by using such information. In some embodiment, however, the 3D model determination device 4 converts the parameterized 3D model determined after step S4 to a multi-texture-compatible rendering format that uses weights along with the texture coordinates to determine the blending factor of each texture (step S5). One needs a list per texture in this case that defines for each vertex the weight of the texture sample and the texture coordinates for that texture. This is illustrated in the following table:

| Vertex ID | $V_1$ | $V_2$ | $V_3$ | $V_4$ | $V_5$ | $V_6$ | $V_7$ | $V_8$ |
|---|---|---|---|---|---|---|---|---|
| TEX0 | 1.0 ; $v_1$ | 0.0 ; - | 0.0 ; - | 0.0 ; - | 0.0 ; - | 0.0 ; - | 0.0 ; - | 1.0 ; $v_8$ |
| TEX1 | 0.0 ; - | 1.0 ; $v_2$ | 1.0 ; $v_3$ | 1.0 ; $v_4$ | 0.0 ; - | 0.0 ; - | 0.0 ; - | 0.0 ; - |
| TEX2 | 0.0 ; - | 0.0 ; - | 0.0 ; - | 0.0 ; - | 1.0 ; $v_5$ | 1.0 ; $v_6$ | 1.0 ; $v_7$ | 0.0 ; - |

This can be rendered by any renderer that supports multi-texturing (which is basically every recent 3D-capable device).

In the embodiment described above, one 2D+Z image source 3 is determined as the main contributor for a vertex $V_i$, and the corresponding texture is applied to this vertex $V_i$ when rendering the 3D model. In other embodiments, the 3D model determination device 4 determines (at step S4) the N main contributors for a vertex $V_i$, with weighting factors which reflect the relative contributions. The parameterized 3D model then specifies N texture identifiers associated with the vertex $V_i$, with corresponding weights. A weighted combination of the textures is applied to the vertex $V_i$ when rendering the 3D model.

In the system 1, texture mapping may be used on arbitrary implicitly defined shapes in a computationally efficient fashion. By linking the texture coordinate generation to the actual geometry and the defining source cameras, one can prevent quality issues due to mismatches between the reconstructed geometry and the actual geometry.

**Figure 5** is a structural view of the 3D model determination device 4, which comprises a processor 5 and a memory 6. The memory 6 stores a computer program P which, when executed by the processor 5, causes the 3D model determination device 4 to execute the method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for determining a 3D model of a surface (S), executed by a 3D model determination device (4), comprising:

   - obtaining (S1) a plurality of 2D+Z images of said surface (S) from respective 2D+Z image sources (3),
   - determining (S2), in function of the 2D+Z images, implicit surface data ($sdf^+$) modeling said surface (S), wherein the implicit surface data ($sdf^+$) specify, for respective sample points ($p_1$) of a 3D field, a distance (d) between said sample point and said surface and a 2D+Z image source identifier ($C_0$, $C_1$, $C_2$) associated with said sample point,
   - determining (S3) a plurality of surface points ($V_i$) in function of the implicit surface data,
   - for at least one of said surface points, determining (S4) at least one 2D+Z image source associated with said surface point in function of the implicit surface data, and at least one texture identifier ($T_{ID}$) and 2D texture coordinates ($v_i$) associated with said surface point in function of 2D+Z image source modeling data associated with the determined at least one 2D+Z image source.

2. Method according to claim 1, wherein determining the implicit surface data comprises selecting one of the 2D+Z image sources (3) as the most reliable 2D+Z image source for a sample point, the distance between said sample point and the surface being determined in function of the 2D+Z image obtained from the selected 2D+Z image source (3), the 2D+Z image source identifier associated with said sample point corresponding to the selected 2D+Z image source (3).

3. Method according to one of claims 1 to 2, comprising obtaining reliability information from said 2D+Z image sources (3), and determining said implicit surface data ($sdf^+$) in function of said reliability information.

4. Method according to one of claims 1 to 3, wherein determining at least one 2D+Z image source associated with a surface point comprises selecting the 2D+Z image source identifier of a sample point which has the smallest absolute distance to the surface among a set of sample points in the neighborhood of the surface point.

5. Method according to one of claims 1 to 4, wherein determining 2D texture coordinates associated with a surface point comprises projecting said surface point to a image plane of the identified 2D+Z image source, in function of said 2D+Z image source modeling data which specify a modelview matrix and a projection matrix.

6. Method according to one of claims 1 to 5, comprising determining (S5) a parameterized 3D model having a weighted multi-textures format in function of the determined surface points, texture identifiers and 2D texture coordinates.

7. Method according to one of claims 1 to 6, comprising determining successive 3D models of said surface (S) at a rate of at least 10 3D models per seconds.

8. Method according to one of claims 1 to 7, comprising transmitting the determined 3D model to a rendering device.

9. Computer program (P) comprising instructions for performing the method of one of claims 1 to 8 when said instructions are executed by a computer.

10. 3D model determination device for determining a 3D model of a surface (S), comprising a processor and a memory configured for:

   - obtaining (S1) a plurality of 2D+Z images of said surface (S) from respective 2D+Z image sources (3),
   - determining (S2), in function of the 2D+Z images, implicit surface data ($sdf^+$) modeling said surface (S), wherein the implicit surface data (sdf$^+$) specify, for respective sample points ($p_1$) of a 3D field, a distance (d) between said sample point and said surface and a 2D+Z image source identifier ($C_0$, $C_1$, $C_2$) associated with said sample point,

- determining (S3) a plurality of surface points ($V_i$) in function of the implicit surface data,
- for at least one of said surface points, determining (S4) at least one 2D+Z image source associated with said surface point in function of the implicit surface data, and at least one texture identifier ($T_{ID}$) and 2D texture coordinates ($v_i$) associated with said surface point in function of 2D+Z image source modeling data associated with the determined at least one 2D+Z image source.

**11.** System comprising a 3D model determination device according to claim 10 and a plurality of 2D+Z image sources.

**Patentansprüche**

**1.** Verfahren zur Bestimmung eines 3D-Modells einer Oberfläche (S), das durch eine 3D-Modell-Bestimmungvorrichtung (4) durchgeführt wird, umfassend:

- Erhalten (S1) mehrerer 2D+Z-Bilder der Oberfläche (S) von jeweiligen 2D+Z-Bildquellen (3),
- Bestimmen (S2), in Abhängigkeit von den 2D+Z-Bildern, von impliziten Oberflächendaten (sdf$^+$), die die Oberfläche (S) modellieren, wobei die impliziten Oberflächendaten (sdf$^+$) für jeweilige Probenpunkte ($p_1$) eines 3D-Feldes einen Abstand (d) zwischen dem Probenpunkt und der Oberfläche und eine 2D+Z-Bildquellenkennung ($C_0$, $C_1$, $C_2$), die mit dem Probenpunkt assoziiert ist, spezifizieren,
- Bestimmen (S3) mehrerer Oberflächenpunkte ($V_i$) in Abhängigkeit von den impliziten Oberflächendaten,
- für mindestens einen der Oberflächenpunkte, Bestimmen (S4) von mindestens einer 2D+Z-Bildquelle, die mit dem Oberflächenpunkt assoziiert ist, in Abhängigkeit von den impliziten Oberflächendaten, und von mindestens einer Texturkennung ($T_{ID}$) und von 2D-Texturkoordinaten ($v_i$), die mit dem Oberflächenpunkt assoziiert sind, in Abhängigkeit von 2D+Z-Bildquellen-Modellierungsdaten, die mit der bestimmten mindestens einen 2D+Z-Bildquelle assoziiert sind.

**2.** Verfahren nach Anspruch 1, wobei das Bestimmen der impliziten Oberflächendaten ein Auswählen von einer der 2D+Z-Bildquellen (3) als die zuverlässigste 2D+Z-Bildquelle für einen Probenpunkt umfasst, wobei der Abstand zwischen dem Probenpunkt und der Oberfläche in Abhängigkeit von dem 2D+Z-Bild bestimmt wird, das von der ausgewählten 2D+Z-Bildquelle (3) erhalten wird, wobei die 2D+Z-Bildquellenkennung, die mit dem Probenpunkt assoziiert ist, der ausgewählten 2D+Z-Bildquelle (3) entspricht.

**3.** Verfahren nach einem der Ansprüche 1 bis 2, umfassend Erhalten von Zuverlässigkeitsinformationen von den 2D+Z-Bildquellen (3) und Bestimmen der impliziten Oberflächendaten (sdf$^+$) in Abhängigkeit von den Zuverlässigkeitsinformationen.

**4.** Verfahren nach einem der Ansprüche 1 bis 3, wobei das Bestimmen von mindestens einer 2D+Z-Bildquelle, die mit einem Oberflächenpunkt assoziiert ist, ein Auswählen der 2D+Z-Bildquellenkennung eines Probenpunkts, der den kleinsten absoluten Abstand zu der Oberfläche aufweist, unter einem Satz von Probenpunkten in der Nachbarschaft des Oberflächenpunkts umfasst.

**5.** Verfahren nach einem der Ansprüche 1 bis 4, wobei das Bestimmen von 2D-Texturkoordinaten, die mit einem Oberflächenpunkt assoziiert sind, ein Projizieren des Oberflächenpunkts auf eine Bildebene der identifizierten 2D+Z-Bildquelle in Abhängigkeit von den 2D+Z-Bildquellen-Modellierungsdaten, die eine Modellansichtsmatrix und eine Projektionsmatrix spezifizieren, umfasst.

**6.** Verfahren nach einem der Ansprüche 1 bis 5, umfassend Bestimmen (S5) eines parametrisierten 3D-Modells mit einem gewichteten Multitexturformat in Abhängigkeit von den bestimmten Oberflächenpunkten, Texturkennungen und 2D-Texturkoordinaten.

**7.** Verfahren nach einem der Ansprüche 1 bis 6, umfassend Bestimmen von sukzessiven 3D-Modellen der Oberfläche (S) mit einer Rate von mindestens 10 3D-Modellen pro Sekunde.

**8.** Verfahren nach einem der Ansprüche 1 bis 7, umfassend Übertragen des bestimmten 3D-Modells zu einer Rendering-Vorrichtung.

9.  Computerprogramm (P), das Anweisungen zum Durchführen des Verfahrens nach einem der Ansprüche 1 bis 8 umfasst, wenn die Anweisungen durch einen Computer ausgeführt werden.

10. 3D-Modell-Bestimmungsvorrichtung zur Bestimmung eines 3D-Modells einer Oberfläche (S), die einen Prozessor und einen Speicher umfasst und ausgelegt ist zum:

    - Erhalten (S1) mehrerer 2D+Z-Bilder der Oberfläche (S) von jeweiligen 2D+Z-Bildquellen (3),
    - Bestimmen (S2), in Abhängigkeit von den 2D+Z-Bildern, von impliziten Oberflächendaten ($sdf^+$), die die Oberfläche (S) modellieren, wobei die impliziten Oberflächendaten ($sdf^+$) für jeweilige Probenpunkte ($p_1$) eines 3D-Feldes einen Abstand (d) zwischen dem Probenpunkt und der Oberfläche und eine 2D+Z-Bildquellenkennung ($C_0$, $C_1$, $C_2$), die mit dem Probenpunkt assoziiert ist, spezifizieren,
    - Bestimmen (S3) mehrerer Oberflächenpunkte ($V_i$) in Abhängigkeit von den impliziten Oberflächendaten,
    - für mindestens einen der Oberflächenpunkte, Bestimmen (S4) von mindestens einer 2D+Z-Bildquelle, die mit dem Oberflächenpunkt assoziiert ist, in Abhängigkeit von den impliziten Oberflächendaten, und von mindestens einer Texturkennung ($T_{ID}$) und von 2D-Texturkoordinaten ($v_i$), die mit dem Oberflächenpunkt assoziiert sind, in Abhängigkeit von 2D+Z-Bildquellen-Modellierungsdaten, die mit der bestimmten mindestens einen 2D+Z-Bildquelle assoziiert sind.

11. System, das eine 3D-Modell-Bestimmungsvorrichtung nach Anspruch 10 und mehrere 2D+Z-Bildquellen umfasst.

**Revendications**

1.  Procédé de détermination d'un modèle 3D d'une surface (S), exécuté par un dispositif de détermination de modèles 3D (4), comprenant :

    - l'obtention (S1) d'une pluralité d'images 2D+Z de ladite surface (S) à partir de sources d'image 2D+Z respectives (3),
    - la détermination (S2), en fonction des images 2D+Z, de données de surface implicites ($sdf^+$) modélisant ladite surface (S), les données de surface implicites ($sdf^+$) spécifiant, pour des points échantillons respectifs ($p_1$) d'un champ 3D, une distance (d) entre ledit point échantillon et ladite surface et un identifiant de source d'image 2D+Z ($C_0$, $C_1$, $C_2$) associé audit point échantillon,
    - la détermination (S3) d'une pluralité de points de surface ($V_i$) en fonction des données de surface implicites,
    - pour au moins un desdits points de surface, la détermination (S4) d'au moins une source d'image 2D+Z associée audit point de surface en fonction des données de surface implicites, et d'au moins un identifiant de texture ($T_{ID}$) et de coordonnées de texture 2D ($v_i$) associés audit point de surface en fonction de données de modélisation de source d'image 2D+Z associées à l'au moins une source d'image 2D+Z déterminée.

2.  Procédé selon la revendication 1, dans lequel la détermination des données de surface implicites comprend la sélection d'une des sources d'image 2D+Z (3) comme la source d'image 2D+Z la plus fiable pour un point échantillon, la distance entre ledit point échantillon et la surface étant déterminée en fonction de l'image 2D+Z obtenue à partir de la source d'image 2D+Z sélectionnée (3), l'identifiant de source d'image 2D+Z associé audit point échantillon correspondant à la source d'image 2D+Z sélectionnée (3).

3.  Procédé selon une des revendications 1 à 2, comprenant l'obtention d'informations de fiabilité à partir desdites sources d'image 2D+Z (3), et la détermination desdites données de surface implicites ($sdf^+$) en fonction desdites informations de fiabilité.

4.  Procédé selon une des revendications 1 à 3, dans lequel la détermination d'au moins une source d'image 2D+Z associée à un point de surface comprend la sélection de l'identifiant de source d'image 2D+Z d'un point échantillon qui a la plus petite distance absolue jusqu'à la surface parmi un ensemble de points échantillons dans le voisinage du point de surface.

5.  Procédé selon une des revendications 1 à 4, dans lequel la détermination de coordonnées de texture 2D associées à un point de surface comprend la projection dudit point de surface sur un plan image de la source d'image 2D+Z identifiée, en fonction desdites données de modélisation de source d'image 2D+Z qui spécifient une matrice de modélisation-visualisation et une matrice de projection.

**6.** Procédé selon une des revendications 1 à 5, comprenant la détermination (S5) d'un modèle 3D paramétré ayant un format multitexture pondéré en fonction des points de surface, identifiants de texture et coordonnées de texture 2D identifiés.

**7.** Procédé selon une des revendications 1 à 6, comprenant la détermination de modèles 3D successifs de ladite surface (S) à une cadence d'au moins 10 modèles 3D par seconde.

**8.** Procédé selon une des revendications 1 à 7, comprenant la transmission du modèle 3D déterminé à un dispositif de rendu.

**9.** Programme informatique (P) comprenant des instructions pour effectuer le procédé d'une des revendications 1 à 8 quand lesdites instructions sont exécutées par un ordinateur.

**10.** Dispositif de détermination de modèles 3D destiné à déterminer un modèle 3D d'une surface (S), comprenant un processeur et une mémoire configurés pour :

- obtenir (S1) une pluralité d'images 2D+Z de ladite surface (S) à partir de sources d'image 2D+Z respectives (3),
- déterminer (S2), en fonction des images 2D+Z, des données de surface implicites (sdf$^+$) modélisant ladite surface (S), les données de surface implicites (sdf$^+$) spécifiant, pour des points échantillons respectifs ($p_1$) d'un champ 3D, une distance (d) entre ledit point échantillon et ladite surface et un identifiant de source d'image 2D+Z ($C_0$, $C_1$, $C_2$) associé audit point échantillon,
- déterminer (S3) une pluralité de points de surface ($V_i$) en fonction des données de surface implicites,
- pour au moins un desdits points de surface, déterminer (S4) au moins une source d'image 2D+Z associée audit point de surface en fonction des données de surface implicites, et au moins un identifiant de texture ($T_{ID}$) et des coordonnées de texture 2D ($v_i$) associés audit point de surface en fonction de données de modélisation de source d'image 2D+Z associées à l'au moins une source d'image 2D+Z déterminée.

**11.** Système comprenant un dispositif de détermination de modèles 3D selon la revendication 10 et une pluralité de sources d'image 2D+Z.

FIG. 1

1

3

3

4

2

S

FIG. 2

RX 2D+Z images — S1

Determine 3D implicite surface data sdf$^+$ — S2

Determine vertices $V_i$ — S3

For vertex $V_i$:
Determine 2D+Z image source
Determine texture identifier $T_{ID}$ and
2D texture coordinates $v_i$ — S4

Format conversion — S5

FIG. 3

3

$C_o$

$p_1(d, C_0)$

$C_1$

3

d

2

$C_2$

3

FIG. 4

3

$C_o$

$V_1$

$V_2$

$C_1$

3

$V_8$

$V_3$

$V_7$

$V_4$

2

$C_2$

3

$V_6$

$V_5$

FIG. 5

4

5

P

6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2660781 A1

**Non-patent literature cited in the description**

- **ANDREW E JOHNSON ; SING B KANG.** Registration and Integration of Textured 3D Data. *Proceedings of 3-D Digital Imaging and Modelling,* May 1997